# EUROPÄISCHE PATENTSCHRIFT

(11) **EP 0 744 565 B1**
(45) Veröffentlichungstag und Bekanntmachung des Hinweises auf die Patenterteilung: **01.08.2001**
(21) Anmeldenummer: 96105510.0
(22) Anmeldetag: 06.04.1996
(51) Int. Cl.: F16H 61/06

(54) **Komfortbewertungsvorrichtung für Kraftfahrzeuge mit Mitteln zur Erfassung und Auswertung der Längsbeschleunigung und Verwendung einer derartigen Vorrichtung in einem Steuergerät für ein Automatikgetriebe**
Comfort evaluation device for motor vehicles including means to detect and evaluate longitudinal acceleration and use of such a device in a controller for an automatic transmission
Dispositif d'évaluation de confort pour automobile comprenant des moyens pour détecter et évaluer l'accélération longitudinale et utilisation d'un tel dispositif dans un dispositif de commande pour une transmission automatique

(30) Priorität: 22.05.1995 DE 19518700
(43) Veröffentlichungstag der Anmeldung: 27.11.1996
(73) Patentinhaber: Bayerische Motoren Werke Aktiengesellschaft, 80788 München (DE)
(72) Erfinder: Freyberger, Ulrich, 85049 Ingolstadt (DE); Seichter, Roland, 87600 Kaufbeuren (DE); Kuecuekay, Ferit, Dr., 85462 Reisen (DE)

(56) Entgegenhaltungen:
- EP-A- 0 537 811
- DE-A- 4 325 413
- DE-A- 4 333 589
- ATZ AUTOMOBILTECHNISCHE ZEITSCHRIFT 96, Nr. 4, 1994, Seiten 228-235, XP000435289 KÜCÜKAY,FERIT; RENOTH, FRIEDRICH: "Intelligente Steuerung von Automatikgetrieben durch den Einsatz der Elektronik"

## Beschreibung

Die Erfindung bezieht sich auf eine Komfortbewertungsvorrichtung für Kraftfahrzeuge mit Mitteln zur Erfassung und Auswertung der Längsbeschleunigung sowie zur Komfortbewertung in Abhängigkeit von ermittelten Charakteristika eines Längsbeschleunigungsverlaufs, als auch auf eine Verwendung einer derartigen Vorrichtung in einem elektronischen Steuergerät für Automatikbegetriebe.

Eine derartige Komfortbewertungsvorrichtung ist beispielsweise aus dem ATZ-Artikel "Intelligente Steuerung von Automatikgetrieben" durch den Einsatz der Elektronik", 4/1994, Seite 228 ff., bekannt. Diese Komfortbewertungsvorrichtung wertet Charakteristika eines Fahrzeugbeschleunigungsverlaufs während eines Schaltvorgangs aus, um daraus mit unterschiedlicher Gewichtung der einzelnen ermittelten Charakteristika eine Komfortnote zu bilden, die mit der subjektiven Benotung eines Schaltvorganges vergleichbar ist. Diese Komfortnote wird beispielsweise zur Optimierung von den Schaltkomfort beeinflussenden Parametern, wie z. B. den Druckverläufen in den Schaltkupplungen, für nachfolgende Gangwechsel herangezogen. Mittels der bekannten Komfortbewertungsvorrichtung werden folgende Charakteristika des Längsbeschleunigungsverlaufes ermittelt: Die maximale Überhöhung der Längsbeschleunigung über das Niveau vor der Schaltung, den maximalen Abfall der Längsbeschleunigung gegenüber dem Niveau nach der Schaltung und die Differenz der Längsbeschleunigung vor und nach dem Schaltvorgang. Darüber hinaus wird zur Auswertung der Längsbeschleunigung auch deren Ableitung gebildet und daraus der maximale und minimale Gradient der Längsbeschleunigung während des Schaltvorgangs ermittelt, der jeweils dem maximalen und minimalen Schaltruck gleichgesetzt wird.

Bei Versuchen wurde festgestellt, daß zwar die Längsbeschleunigung bzgl. des Komforts wohl der einflußreichste Parameter ist, jedoch führten die ermittelten Charakteristika noch nicht zu einer Komfortbewertung, die optimal mit dem subjektiven Komfortempfinden übereinstimmte.

Es ist Aufgabe der Erfindung, eine Komfortbewertung für Kraftfahrzeuge derart zu optimieren, daß sie hinreichend nahe das subjektive Komfortempfinden von Kraftfahrzeuginsassen wiedergibt.

Diese Aufgabe wird durch die kennzeichnenden Merkmale des Patentanspruchs 1 gelöst. Weitere Ausgestaltungen der Erfindung sind in den abhängigen Ansprüchen 2-5 definiert, eine Verwendung der Vorrichtung nach einem der vorstehenden Ansprüche ist Gegenstand des Anspruchs 6.

Nach Anspruch 1 weisen die Mittel zur Auswertung der Längsbeschleunigung eine Recheneinheit auf, mit der die Häufigkeit der Flankenwechsel als erstes Charakteristikum ermittelt wird.
Dieser Erfindung liegt die Erkenntnis zugrunde, daß die Anzahl der Schwingungen im Längsbeschleunigungsverlauf, insbesondere innerhalb einer vorgegebenen Zeit im Sekundenbereich, einen starken Einfluß auf das Komfortempfinden aufweist.

Nach Anspruch 2 ermittelt die Recheneinheit Beschleunigungsdifferenz zwischen aufeinanderfolgenden Flankenwechseln als zweites Charakteristikum. Die Beschleunigungsdifferenz zwischen zwei aufeinanderfolgenden Flankenwechseln übt in ähnlichem Ausmaß wie die Häufigkeit der Flankenwechsel bzw. die Anzahl der Schwingungen einen Einfluß auf das subjektive Komfortempfinden aus.

Nach Anspruch 3 ermittelt die Recheneinheit die Steilheit des Längsbeschleunigungsverlaufs zwischen aufeinanderfolgenden Flankenwechseln als drittes Charakteristikum.
Die Steilheit berücksichtigt nicht nur die absolute Beschleunigungsdifferenz zwischen zwei aufeinanderfolgenden Flankenwechseln, sondern auch die Zeitspanne, innerhalb derer diese Beschleunigungsdifferenz auftritt. Je kürzer die Zeit ist, innerhalb derer die Beschleunigungsdifferenz zwischen zwei aufeinanderfolgenden Flankenwechseln auftritt, desto stärker wird eine Komfortverschlechterung empfunden.

Zur optimalen Komfortbewertung werden vorzugsweise alle drei ermittelten Charakteristika, die Häufigkeit der Flankenwechsel, die Beschleunigungsdifferenz und die Steilheit, berücksichtigt, wobei im speziellen eine Gewichtung der Komfortbewertung der einzelnen Charakteristika vorgenommen werden kann. Beispielsweise wird eine Gesamtkomfortnote mittels der Addition gewichteter, aus den einzelnen Charakteristika gebildeter Einzelkomfortnoten berechnet. Entsprechend einer ermittelten Gesamtkomfortnote können beliebige einstellbare, den Komfort beeinflussende Parameter zur Optimierung verändert und angepaßt werden. Diese Parameteranpassung ist beispielsweise bei allen elektronisch geregelten Kraftfahrzeugsystemen anwendbar. Ergänzend wird darauf hingewiesen, daß vorzugsweise die Auswertung der Längsbeschleunigung zur Komfortbewertung ereignis- oder zeitgesteuert begonnen und beendet werden kann.

Eine vorteilhafte Weiterbildung der Erfindung ist der Gegenstand des Patentanspruchs 4.
Erfindungsgemäß wird der Betrag und/oder das Vorzeichen der Beschleunigungsdifferenz der Beschleunigungswerte am Anfang und am Ende einer vorgegebenen Zeitspanne als viertes Charakteristikum ermittelt. Vorzugsweise ist diese vorgegebene Zeitspanne gleich der Zeitspanne, in der die Längsbeschleunigung zur Komfortbewertung in Abhängigkeit von den ermittelten ersten bis dritten Charakteristika ausgewertet wird (Auswertezeit).

Die Mittel zur Erfassung und Auswertung der Längsbeschleunigung sind beispielsweise Sensoren und Recheneinheiten, die mit einem elektronischen Steuergerät zusammenwirken bzw. in elektronischen Steuergeräten integriert sind.

Eine erfindungsgemäße Komfortbewertungsvorrichtung nach den Ansprüchen 1 bis 4 kommt, wie sich durch Versuchsergebnisse empirisch herausgestellt hat, dem subjektiven Komfortempfinden von Fahrzeuginsassen besonders gut entgegen.

Eine Verwendung der erfindungsgemäßen Komfortbewertungsvorrichtung nach Anspruch 5 in einem elektronischen Steuergerät für Automatikgetriebe zur Adaption komfortbeeinflussender Parameter bei einem Schaltvorgang während eines Gangwechsels hat sich als besonders wirksam herausgestellt. Komfortbeeinflussende Parameter, die entsprechend der erfindungsgemäßen Komfortbewertung adaptiert werden, sind bei einer Verwendung für Automatikgetriebe insbesondere Druckparameter und Zeitparameter für die Kupplungssteuerung sowie die Zeitdauer und das Ausmaß einer Momentenreduktion während eines Schaltvorgangs, wobei diese Parameter wiederum von weiteren Parametern abhängen können, wie z. B. der Getriebeeingangsdrehzahl, dem Brennkraftmaschinendrehmoment, der Getriebetemperatur, der Drosselklappenstellung und der Brennkraftmaschinendrehzahl.

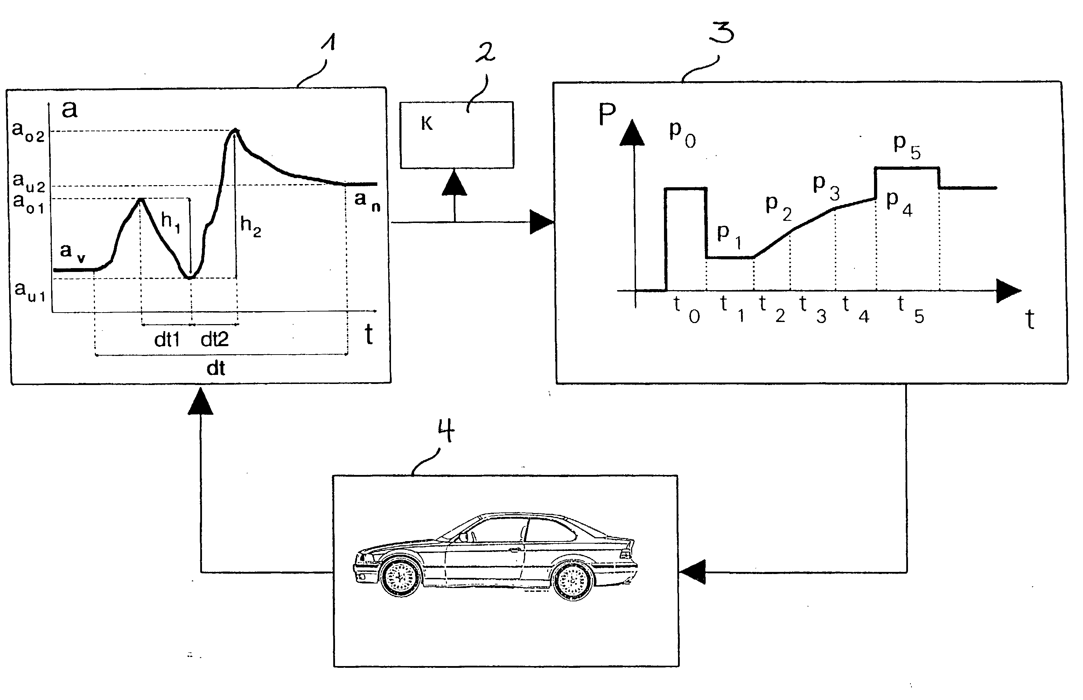

In der Zeichnung ist ein Ausführungsbeispiel der Erfindung dargestellt. Sie zeigt eine erfindungsgemäße Komfortbewertung im Zusammenhang mit einer daraus folgenden Adaption von Kraftfahrzeugparametern.

In der Zeichnung ist ein Regelkreis mit einer Recheneinheit 1, einer Benotungseinheit 2, einer Adaptionseinheit 3 und einer Aktuator-/Sensor-Vorrichtung 4 dargestellt. Vorzugsweise sind die Recheneinheit 1, die Benotungseinheit 2 und die Adaptionseinheit 3 in einem elektronischen Steuergerät integriert. Das Ausführungsbeispiel bezieht sich auf eine Verwendung der Komfortbewertungsvorrichtung zur Adaption komfortbeeinflussender Parameter P; p₀ bis p₅ für elektronisch gesteuerte Automatikgetriebe.

Mittels der Aktuator-/Sensorvorrichtung 4 wird die Längsbeschleunigung des Kraftfahrzeuges erfaßt und an die Recheneinheit 1 weitergegeben. Da in diesem Beispiel die erfindungsgemäße Komfortbewertung während eines Gangwechsels angewendet werden soll, speichert die Recheneinheit 1 die Längsbeschleunigung des Kraftfahrzeuges zumindest für die Zeitspanne dt, innerhalb derer ein Schaltvorgang während eines Gangwechsels vorgenommen wird. Diese Zeitspanne dt wird beispielsweise durch ein Schaltbefehlsignal innerhalb des hier nicht dargestellten elektronischen Steuergerätes vorgegeben und kann in Abhängigkeit von den Funktionen des Getriebesteuergerätes variabel sein.

In der Recheneinheit 1 ist ein Verlauf der Längsbeschleunigung a über der Zeit t eingezeichnet. Zu Beginn eines Schaltvorgans, hier bei einer Rückschaltung, liegt ein Längsbeschleunigungswert aᵥ vor. Am Ende des Schaltvorgangs, d. h. nach Verstreichen der Zeitspanne dt, wird ein Längsbeschleunigungswert aₙ erreicht. Innerhalb der Zeitspanne dt treten im Verlauf der Längsbeschleunigung a Schwingungen, die zur Komfortverschlechterung beitragen, auf. Aus diesen Schwingungen werden zur Komfortbewertung folgende Charakteristika ermittelt:
1. die Häufigkeit der Flankenwechsel, im folgenden mit "n" bezeichnet;
2. die Beschleunigungsdifferenz zwischen je zwei aufeinanderfolgenden Flankenwechseln, im folgenden mit "h" bezeichnet;
3. die Steilheit zwischen je zwei aufeinanderfolgenden Flankenwechseln, im folgenden mit "h/dt" bezeichnet.

Ein Flankenwechsel ist durch den Wechsel von einer steigenden in eine fallende Flanke bzw. von einer fallenden in eine steigende Flanke definiert. Im dargestellten Beispiel findet ein erster Flankenwechsel bei dem Längsbeschleunigungswert aₒ₁, ein zweiter Flankenwechsel beim Längsbeschleunigungswert aᵤ₁ und ein dritter Flankenwechsel beim Längsbeschleunigungswert aₒ₂ statt. Somit liegt in der vorgegebenen Zeitspanne dt als Auswertezeit eine Häufigkeit der Flankenwechsel von n = 3 vor. Zwischen dem ersten und dem zweiten Flankenwechsel tritt eine Beschleunigungsdifferenz h₁, zwischen dem zweiten und dritten Flankenwechsel eine Beschleunigungsdifferenz h₂ auf. Die Beschleunigungsdifferenz h₁ ergibt sich aus der Differenz zwischen dem Längsbeschleunigungswert aₒ₁ beim ersten Flankenwechsel und dem Längsbeschleunigungswert aᵤ₁ beim zweiten Flankenwechsel. Die Beschleunigungsdifferenz h₂ wird durch die Differenz zwischen dem Längsbeschleunigungswert aₒ₂ beim dritten Flankenwechsel und dem Längsbeschleunigungswert aᵤ₁ beim zweiten Flankenwechsel gebildet.

Im folgenden werden die Steilheiten zwischen dem ersten und zweiten sowie dem zweiten und dritten Flankenwechsel bestimmt. Die Steilheit zwischen dem ersten und zweiten Flankenwechsel ergibt sich aus dem Verhältnis der Beschleunigungsdifferenz h₁ zur ersten Zeitspanne dtl zwischen dem ersten und zweiten Flankenwechsel. Die Steilheit zwischen dem zweiten und dritten Flankenwechsel ist der Quotient aus der Beschleunigungsdifferenz h₂ zur zweiten Zeitspanne dt2 zwischen dem zweiten und dritten Flankenwechsel. Die Häufigkeit der Flankenwechsel n = 3, die Beschleunigungsdifferenzen h₁ und h₂ sowie die Steilheiten h₁/dt1 und h₂/dt2 werden an die Benotungseinheit 2 weitergegeben. In der Benotungseinheit 2 wird eine Gesamtkomfortnote K aus den Einzelkomfortnoten gebildet, wobei die Einzelkomfortnoten aus der Häufigkeit der Flankenwechsel, den Beschleunigungsdifferenzen innerhalb der Zeitspanne dt und den Steilheiten innerhalb der Zeitspanne dt gebildet werden. Die Gesamtkomfortnote K wird vorzugsweise durch die gewichteten Einzelkomfortnoten gebildet, durch die beispielsweise die Einzelkomfortnote, die aufgrund der Steilheiten entsteht, stärker gewichtet wird als die Einzelkomfortnoten, die jeweils aus der Häufigkeit der Flankenwechsel oder der Beschleunigungsdifferenzen ermittelt werden. Weiterhin könnte zur Bildung einer Gesamtkomfortnote in der Benotungseinheit 2 auch der Betrag und das Vorzeichen der Beschleunigungsdifferenz aₙ - aᵥ zwischen den Längsbeschleunigungswerten aₙ, aᵥ am Anfang und am Ende der vorgegebenen Zeitspanne dt berücksichtigt werden.

In Abhängigkeit von der Komfortnote K wird eine Adaption der komfortbeeinflussenden Parameter P in der Adaptioneinheit 3 vorgenommen. Für jede Zykluszeit t₀ bis t₅ wird entsprechend der zuvor ermittelten Komfortnote K ein entsprechender Parameterwert p₀ bis p₅, z.B. Kupplungsdruckwerte oder Zeitwerte, eingestellt. Die Einstellung wird am Kraftfahrzeug über die Aktuator/Sensorvorrichtung 4 vorgenommen. Die Auswirkung auf die Längsbeschleunigung wird daraufhin über die Aktuator/Sensorvorrichtung 4 wieder erfaßt und an die Recheneinheit 1 erneut weitergegeben.

Mit dieser erfindungsgemäßen Komfortbewertung wird zum einen das subjektive Empfinden des Kraftfahrzeuginsassen optimal berücksichtigt und zum anderen eine Möglichkeit geschaffen, komfortbeeinflussende Parameter aktuell zu adaptieren, ohne empirisch ermittelte Kennfelder im Steuergerät abspeichern zu müssen.

## Patentansprüche

1. Komfortbewertungsvorrichtung für Kraftfahrzeuge mit Mitteln zur Erfassung und Auswertung (1) der Längsbeschleunigung (a) sowie zur Komfortbewertung in Abhängigkeit von ermittelten Charakteristika eines Längsbeschleunigungsverlaufes, wobei die Mittel zur Auswertung der Längsbeschleunigung (a) eine Recheneinheit (1) aufweisen, dadurch gekennzeichnet, daß die Recheneinheit (1) die Häufigkeit (n) der Flankenwechsel der Längsbeschleunigung (a) innerhalb einer vorgegebenen Zeitspanne (dt) als erstes Charakteristikum ermittelt.

2. Komfortbewertungsvorrichtung nach Anspruch 1 dadurch gekennzeichnet, daß die Recheneinheit (1) die Beschleunigungsdifferenz (h₁, h₂) zwischen aufeinanderfolgenden Flankenwechseln der Längsbeschleunigung (a) als zweites Charakteristikum ermittelt.

3. Komfortbewertungsvorrichtung nach Anspruch 1 oder 2 dadurch gekennzeichnet, daß die Recheneinheit (1) die Steilheit (h₁/dt1, h₂/dt2) des Längsbeschleunigungsverlaufs zwischen aufeinanderfolgenden Flankenwechseln der Längsbeschleunigung (a) als drittes Charakteristikum ermittelt.

4. Komfortbewertungsvorrichtung nach einem der Ansprüche 1 bis 3, dadurch gekennzeichnet, daß die Recheneinheit (1) den Betrag und/oder das Vorzeichen der Beschleunigungsdifferenz (aₙ - aᵥ) zwischen den Beschleunigungswerten am Anfang (aᵥ) und am Ende (aₙ) einer vorgegebenen Zeitspanne (dt) als viertes Charakteristikum ermittelt.

5. Komfortbewertungsvorrichtung nach wenigstens zwei der Ansprüche 1 bis 4, dadurch gekennzeichnet, daß die Recheneinheit (1) eine Gesamtkomfortnote mittels der Addition gewichteter, aus den einzelnen Charakteristika gebildeter Einzelkomfortnoten berechnet.

6. Verwendung der Komfortbewertungsvorrichtung nach einem der Ansprüche 1 bis 5 in einem elektronischen Steuergerät für Automatikgetriebe zur Adaption komfortbeeinflussender Parameter (P; p₀, p₁, p₂, p₃, p₄, p₅) bei einem Schaltvorgang während eines Gangwechsels.

## Claims

1. A comfort evaluating device for motor vehicles comprising means (1) for determining and evaluating the longitudinal acceleration (a) and for evaluating the comfort in dependence on determined characteristics of a longitudinal acceleration curve, wherein the means for evaluating the longitudinal acceleration (a) comprise a computer unit (1), which determines a first characteristic in the form of the frequency (n) of the change of slope of the longitudinal acceleration (a) within a preset time span (dt).

2. A comfort evaluating device according to claim 1, characterised in that the computer unit (1) determines a second characteristic in the form of the difference (h₁, h₂) in acceleration between successive changes of slope of the longitudinal acceleration (a).

3. A comfort evaluating device according to claim 1 or 2, characterised in that the computer unit determines a third characteristic in the form of the steepness (h₁/dt1, h₂/dt2) of the longitudinal acceleration curve between successive changes of slope of the longitudinal acceleration (a).

4. A comfort evaluating device according to any of claims 1 to 3, characterised in that the computer unit (1) determines a fourth characteristic in the form of the value and/or the sign of the difference (aₙ - aᵥ) between the acceleration values at the beginning (aᵥ) and at the end (aₙ) of a preset time span (dt).

5. A comfort evaluating device according to at least two of claims 1 to 4, characterised in that the computer unit (1) calculates an overall comfort grading by addition of weighted individual comfort gradings obtained from the individual characteristics.

6. Use of the comfort evaluating device according to any of claims 1 to 5 in an electronic controller for automatic transmissions for adaptation of comfort-influencing parameters (P; p₀, p₁, p₂, p₃, p₄, p₅) during gear-shifting.

## Revendications

1. Dispositif d'évaluation du confort de véhicules automobiles, comprenant des moyens pour saisir et exploiter (1) l'accélération longitudinale (a) ainsi que pour évaluer le confort en fonction de caractéristiques obtenues d'une courbe d'accélération longitudinale, les moyens d'exploitation de l'accélération longitudinale (a) comprenant une unité de calcul (1) qui détermine la fréquence (n) des changements de flancs à l'intérieur d'une durée prédéterminée (dt),
caractérisé en ce que
l'unité de calcul (1) détermine l'accélération longitudinale (a) comme première caractéristique.

2. Dispositif d'évaluation du confort selon la revendication 1,
caractérisé en ce que
l'unité de calcul (1) détermine la différence d'accélération (h₁, h₂) entre deux changements de flancs successifs de l'accélération longitudinale (a), comme seconde caractéristique.

3. Dispositif d'évaluation du confort selon la revendication 1 ou 2,
caractérisé en ce que
l'unité de calcul (1) détermine la pente (h₁/dt1, h₂/dt2) de la courbe d'accélération longitudinale entre deux changements de flancs successifs de l'accélération longitudinale (a), comme troisième caractéristique.

4. Dispositif d'évaluation du confort selon l'une des revendications 1 à 3,
caractérisé en ce que
l'unité de calcul (1) détermine l'amplitude et/ou le signe algébrique de la différence d'accélération (aₙ - aᵥ) entre les valeurs d'accélération au début (aᵥ) et à la fin (aₙ) d'une durée prédéterminée (dt), comme quatrième caractéristique

5. Dispositif d'évaluation du confort selon au moins deux des revendications 1 à 4,
caractérisé en ce que
l'unité de calcul (1) calcule une note de confort par l'addition des notes de confort simples, pondérées, formées à partir des différentes caractéristiques.

6. Application du dispositif d'évaluation du confort selon l'une des revendications 1 à 5 à un appareil de commande électronique pour une boîte de vitesses automatique pour l'adaptation de paramètres influençant le confort (P ; p₀, p₁, p₂, p₃, p₄, p₅) lors d'une commutation pendant un changement de rapport de vitesses.
